# EUROPÄISCHE PATENTSCHRIFT

(11) **EP 1 193 132 B1**
(45) Veröffentlichungstag und Bekanntmachung des Hinweises auf die Patenterteilung: **25.02.2004**
(21) Anmeldenummer: 01123456.4
(22) Anmeldetag: 28.09.2001
(51) Int. Cl.: B60R 16/02

(54) **Tülle für einen Kabelstrang und Kraftfahrzeug mit zumindest einer solchen Tülle im Bereich einer Türtrennstelle**
Wire harness grommet and vehicle using the same on the hinge side of a door
Manchon pour un faisceau de câbles et véhicule avec un tel manchon du côté de la charnière de la porte

(30) Priorität: 28.09.2000 DE 10049249; 24.11.2000 DE 10058563
(43) Veröffentlichungstag der Anmeldung: 03.04.2002
(73) Patentinhaber: WOCO Industrietechnik GmbH, 63628 Bad-Soden Salmünster (DE)
(72) Erfinder: Achatz, Robert, 36396 Steinau-Ulmbach (DE); Körber, Gernot, 63607 Wächtersbach (DE)
(74) Vertreter: Weber-Bruls, Dorothée, Dr.

(56) Entgegenhaltungen:
- EP-A- 0 882 922
- DE-A- 3 500 358
- FR-A- 2 730 785
- GB-A- 2 149 469

## Beschreibung

Die Erfindung betrifft eine Tülle, umfassend eine Hülle, wie einen Faltbalg oder dergleichen, für einen Kabelstrang zwischen zwei Montageelementen, insbesondere in Form von einer Tür und der Karosserie eines Kraftfahrzeuges, und zumindest ein Befestigungsglied für jedes Montageelement; sowie ein Kraftfahrzeug mit zumindest einer solchen Tülle im Bereich einer Türtrennstelle.

Eine gattungsgemässe Tülle ist aus GB-A-2 149 469 bekannt.

Die Tüllen, die zur Zeit in Kraftfahrzeugen im Bereich von Türtrennstellen zur Kabelführung eingesetzt werden, weisen eine große Vielzahl von Nachteilen auf. So sind die bekannten Tüllen insbesondere schwer zu montieren bzw. zu demontieren, können selbst leicht beschädigt oder gar zerstört werden bei einer Montage oder Demontage. Ferner kommt es bislang häufig zu fehlerhaften elektrischen Verbindungen unter Einsatz einer bekannten Tülle für einen Kabelstrang.

Die Aufgabe der vorliegenden Erfindung ist es, die gattungsgemäße Tülle derart weiterzuentwickeln, daß die Nachteile des Stands der Technik überwunden werden.

Diese Aufgabe wird erfindungsgemäß dadurch gelöst, daß die Hülle aus einem ersten thermoplastischen Kunststoff, insbesondere einem thermoplastischen Elastomer, und jedes Befestigungsglied aus einem zweiten thermoplastischen Kunststoff, insbesondere Polypropylen, in einem dichten, chemischen Verbund miteinander hergestellt sind.

Dabei kann vorgesehen sein, daß erste Befestigungsglieder, insbesondere in Form von Clips, jeweils einen Rasthaken zum Angriff an ein Montageelement und einen davon beabstandeten Rasthakenanschlag aufweisen, wobei der Abstand zwischen dem Rasthaken und dem Rasthakenanschlag vorzugsweise im mm-Bereich liegt.

Ferner wird mit der Erfindung vorgeschlagen, daß jedes erste Befestigungsglied eine Nase zur Positionierung des entsprechenden Montageelements an dem Rasthaken aufweist, wobei sich die Nase vorzugsweise mit einer Höhe von dem Rasthaken abhebt, die kleiner als der Abstand zwischen dem Rasthaken und dem Rasthakenanschlag ist.

Auch kann erfindungsgemäß vorgesehen sein, daß zumindest auf der Seite des einen Montageelements, insbesondere der Karosserie des Kraftfahrzeuges, zumindest ein Befestigungsglied mit einem ersten Stecker des Kabelstrangs lösbar verbindbar, insbesondere verrastbar, ist, vorzugsweise über eine Ausnehmung in dem Befestigungsglied und eine Nase auf dem ersten Stecker, und der erste Stecker mit einem zweiten Stecker, vorzugsweise unter zumindest bereichsweiser Zwischenschaltung einer Dichtung, verbindbar ist.

Weiterhin wird erfindungsgemäß vorgeschlagen, daß die Hülle zwei offene Enden aufweist, und an jedem offenen Ende der Hülle jeweils zwei sich längs des Umfangs der Hülle diametral gegenüberliegende Befestigungsglieder angeordnet sind, wobei vorzugsweise die sich diametral gegenüberliegenden Befestigungsglieder entweder als zwei erste Befestigungsglieder in Form von Clips, insbesondere auf der Seite der Tür der Karosserie des Kraftfahrzeuges, oder als ein erstes Befestigungsglied in Form eines Clips und ein zweites Befestigungsglied in Form eines Einführhakens, insbesondere auf der Seite der Karosserie des Kraftfahrzeuges, ausgebildet sind.

Es wird erfindungsgemäß auch vorgeschlagen, daß die Hülle zwei offene Enden mit jeweils einer ersten, umlaufenden Dichtlippe zum Angreifen an ein Montageelement aufweist.

Dabei wird erfindungsgemäß vorgeschlagen, daß jede erste Dichtlippe als Labyrinth-Dichtung, vorzugsweise mit mehreren Dichtzungen zum dichten Angreifen an das jeweilige Montageelement, ausgebildet ist.

Ferner wird erfindungsgemäß vorgeschlagen, daß auf der Seite des einen Montageelements, insbesondere der Karosserie des Kraftfahrzeuges, die Hülle einen Anschlag für den ersten Stecker zum Positionieren, Schützen und Abdichten des ersten Steckers aufweist.

Ferner wird mit der Erfindung zur Erleichterung der Montage vorgeschlagen, daß zweite Befestigungsglieder jeweils zumindest einen Einhängehaken aufweisen, wobei vorzugsweise jeweils an einem ersten Ende eines, insbesondere biegesteifen, Rahmens, wie aus Polypropylen oder dergleichen Kunststoff, der Einhängehaken an einer ersten Ecke ausgeformt und eine erste Dichtlippe an einer zweiten Ecke angebracht, vorzugsweise angespritzt, ist.

Ferner kann erfindungsgemäß vorgesehen sein, daß die ersten Befestigungsglieder jeweils an einem ersten Ende eines, insbesondere biegesteifen, Rahmens, wie aus Polypropylen oder dergleichen Kunststoff, einen Rasthaken sowie einen Rasthakenanschlag an einer ersten Ecke ausgeformt und eine erste Dichtlippe an einer zweiten Ecke angebracht, vorzugsweise angespritzt, haben.

Insbesondere zum Ausgleichen der Toleranzen in der Ebenheit der Montageelemtente kann erfindungsgemäß zumindest eine zweite Dichtlippe, insbesondere mit zwei, sich voneinander weg erstreckenden, schräg verlaufenden Dichtzungen, angebracht an ein Befestigungsglied, vorzugsweise angespritzt an einen Rahmen, zum dichten Angreifen an das jeweilige Montageelement, vorgesehen sein.

Bevorzugt ist dabei, daß die zweite Dichtlippe zwischen dem Rasthaken oder dem Einhängehaken und der ersten Dichtlippe an den Rahmen angebracht, vorzugsweise aus thermoplastischem Elastomer angespritzt, ist.

Schließlich wird erfindungsgemäß ein Kraftfahrzeug mit zumindest einer Tülle im Bereich einer Türtrennstelle für zumindest eine elektrische Leitung vorgeschlagen, wobei die Tülle mit einem ersten Stecker für den in der Hülle geführten Kabelstrang lösbar verbindbar ist, der erste Stecker mit einem zweiten Stecker zusammensteckbar ist, und der zweite Stecker mit einem daran montierten Kabelstrang in der Karosserie des Kraftfahrzeuges installiert ist.

Die erfindungsgemäße Tülle ermöglicht erstmals aufgrund des chemischen Verbunds zwischen Hülle und Befestigungsgliedern eine große Dichtigkeit, auch gegenüber Schallnebenwegen, und einen festen Halt, der die Transportsicherheit und Verliersicherheit steigert. Ferner ist aufgrund des Einsatzes von thermoplastischen Kunststoffen ein Recyclen der Bestandteile der Tülle für ein Kabelstrang möglich, was umweltfreundlich ist. Der Einsatz von thermoplastischen Kunststoffen führt außerdem zu einem Gewichtsvorteil sowie einer Gestaltungsvielfältigkeit zur Steigerung des ästhetischen Gesamteindrucks.

Die erfindungsgemäße Ausgestaltung von ersten Befestigungsgliedern, nämlich Clips, jeweils mit einem Rasthaken und einem davon beabstandeten Rasthakenanschlag sorgt für eine Verminderung der Beschädigung des Rasthakens insbesondere durch Anlegen einer übermäßigen Kraft zwecks Montage oder Demontage.

Der erfindungsgemäße Rasthaken mit Nase sorgt ferner für ein exaktes Positionieren der Tülle an einer Fahrzeugkarosserie sowie einer Fahrzeugtür.

Der Montageaufwand wird erfindungsgemäß dadurch reduziert, unter gleichzeitiger Steigerung der Montagesicherheit, daß pro offenem Ende der Hülle der Tülle lediglich zwei Befestigungsglieder zum Einsatz kommen.

Zur weiteren Erleichterung der Montage sind erfindungsgemäß zweite Befestigungsglieder, nämlich Einführhaken, jeweils mit einem Einhängehaken vorgesehen. Dabei ist es bevorzugt, daß auf einer Montageseite, insbesondere der Seite der Karosserie eines Kraftfahrzeuges, ein erstes Befestigungsglied sowie ein dem ersten Befestigungsglied diametral gegenüberliegendes zweites Befestigungsglied vorgesehen sind. Bei einer Montage der erfindungsgemäßen Tülle wird dann zuerst der Einhängehaken des zweiten Befestigungsglieds schräg an ein Montageelement angesetzt und zentriert sich beim Einführen in eine Aussparung in dem Montageelement selbst, wobei die Montagekräfte sehr niedrig sind. Sobald das zweite Befestigungsglied mit dem Montageelement in Verbindung gebracht worden ist, kann dann das erste Befestigungsglied in das Montageelement gedrückt werden, wobei durch die Zentrierung über das zweite Befestigungsglied nur noch ein Druckpunkt zur Montage erforderlich ist.

Eine Abdichtung, einschließlich einer akustischen Abdichtung, wird zusätzlich zur Ausformung der Tülle als ein chemischer Verbund durch die spezielle Ausformung einer ersten Dichtlippe der Hülle, nämlich in Form einer Labyrinth-Dichtung, sowie durch Einsatz eines Anschlags zwischen der Hülle und einem ersten Stecker gewährleistet.

Eine zweite Dichtlippe zwischen einer jeden ersten Dichtlippe und dem dazugehörigen Rasthaken oder Einhängehaken kann vorteilhafterweise zu einer Ausgleichung von Toleranzen in der Ebenheit eines Montagebleches sorgen. Dabei ist die zweite Dichtlippe vorzugsweise mit zwei sich voneinander weg erstreckenden, schräg verlaufenden Dichtzungen ausgebildet, um einen möglichst große Toleranzausgleich zu ermöglichen und nur geringe Ausdrückkräfte zu benötigen.

Weitere Dichtigkeit, einschließlich einer akustischen Dichtigkeit, wird erfindungsgemäß durch den Einsatz einer Dichtung zwischen dem ersten Stecker und dem zweiten Stecker gewährleistet.

Ferner wird eine Beschädigungsgefahr des Kabelstrangs sowohl bei der Herstellung als auch seitens eines Endabnehmers dadurch erheblich reduziert, daß erfindungsgemäß ein zweiter Stecker fest in der Karosserie eines Fahrzeuges montiert ist und der damit im Bereich einer Türtrennstelle verbindbare erste Stecker lösbar mit der Tülle verbunden seitens eines Kabelherstellers geliefert wird.

Insgesamt ist die erfindungsgemäße Tülle von bislang einzigartiger Schlichtheit sowie Robustheit und selbst wiederverwendbar sowie recyclebar. Die Robustheit der Hülle führt im Einsatz im Bereich einer Türtrennstelle eines Kraftfahrzeuges auch zu einer sicheren Führung elektrischer Leitungen, die in diesem Ausmaß neuartig ist, bei gleichzeitig reduziertem Montageaufwand.

Weitere Merkmale und Vorteile der Erfindung ergeben sich aus der nachfolgenden Beschreibung, in der ein Ausführungsbeispiel anhand von schematischen Zeichnungen im Einzelnen erläutert ist. Dabei zeigt:
- Figur 1: eine Seitenansicht einer erfindungsgemäßen Tülle, im unmontierten Zustand,
- Figur 2: eine Teilschnittvergrößerung der Tülle gemäß Figur 1, sowohl in einem unmontierten als auch in einem an einer Tür eines Kraftfahrzeuges montierten Zustand;
- Figur 3: eine weitere Teilschnittvergrößerung der Tülle gemäß Figur 1, sowohl in einem unmontierten als auch in einem an die Karosserie eines Kraftfahrzeuges montierten Zustand; und
- Figur 4: eine Schnittdarstellung durch ein Ende einer weiteren erfindungsgemäßen Tülle, im unmontierten Zustand im Bereich der Karosserie eines Kraftfahrzeuges.

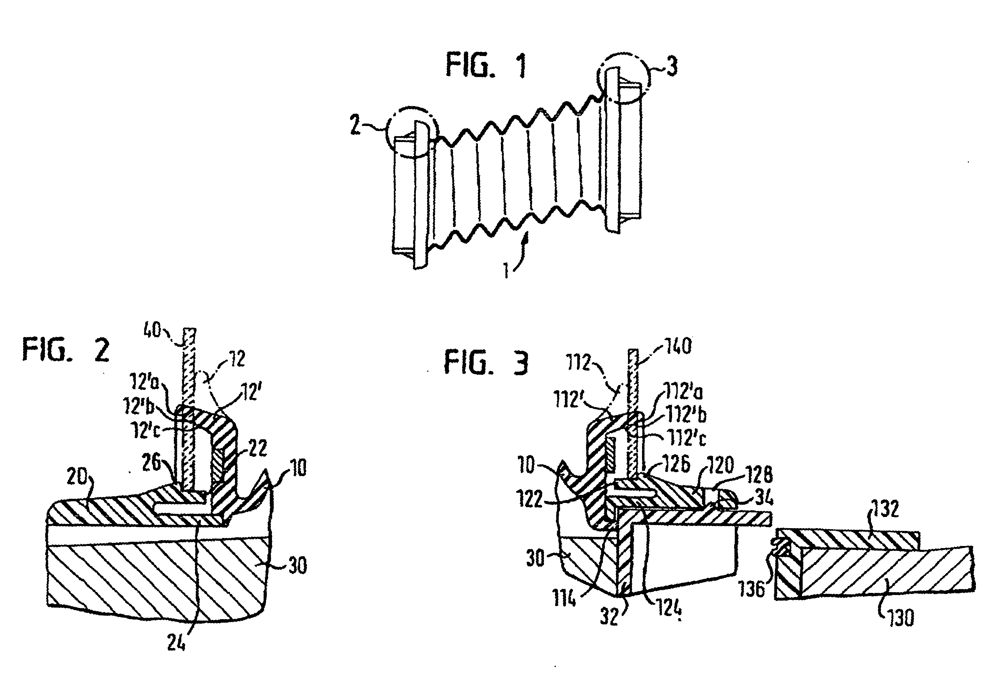

Die erfindungsgemäße Tülle 1, wie sie in Figur 1 gezeigt ist, umfaßt gemäß den Figuren 2 und 3 einen Faltbalg 10 mit zwei offenen Enden, wobei an jedem offenen Ende zwei Clips 20, 120 angeordnet sind. Der Faltbalg 10 ist dabei aus einem thermoplastischen Elastomer in einem chemischen Verbund mit den Clips 20, 120 aus Polypropylen in einem Heißspritzverfahren ausgebildet.

Die Tülle 1 ist zur Führung eines Kabelstrangs 30 zwischen einem Tür-Blech 40 und einem Karosserie-Blech 140 eines Kraftfahrzeuges montierbar. Zu diesem Zweck umfaßt der Faltbalg 10 an seinen beiden offenen Enden jeweils eine umlaufende Dichtlippe 12, 12', 112, 112', die in den Figuren 2 und 3 sowohl in einer unmontierten Position mit den Bezugszeichen 12', 112' als auch in einer montierten Position mit den Bezugszeichen 12, 112 dargestellt sind. Die Dichtlippen 12', 112' weisen dabei jeweils drei Dichtzungen 12'a, 12'b, 12'c, 112'a, 112'b, 112'c zur Steigerung der Dichtigkeit auf. Ferner umfaßt der Faltbalg 10 an seinem offenen Ende auf der Karosserieseite einen Anschlag 114 für eine dichte Verbindung mit einem ersten Stecker 32, der fest an den Kabelstrang 30 montiert ist, auf.

Auf der Seite des Tür-Blechs 40, siehe Figur 2, sind zwei Clips 20 mit jeweils einem Rasthaken 22 zum Angriff an das Tür-Blech 40 und einem davon beabstandeten Rasthakenanschlag 24 vorgesehen. Dabei sorgt der Rasthakenanschlag 24, der einen Abstand von circa 1 mm vom Rasthaken 22 aufweist, als Schutz vor der Zerstörung des Rasthakens 22 insbesondere im Falle einer Demontage durch Anlegen einer Kraft an den Rasthaken 22 in Richtung des Rasthakenanschlages 24 zur Lösung des Angriffes an das Tür-Blech 40. Die Position des Tür-Blechs 40 relativ zum Clip 20 wird ferner durch eine Nase 26 auf dem Rasthaken 22 sichergestellt.

Die Clips 120 auf der Seite der Karosserie 140, von denen einer in Figur 3 dargestellt ist, unterscheiden sich von einem mit Bezug auf Figur 2 beschriebenen türseitigen Clip 20 im wesentlichen durch das Bereitstellen einer Ausnehmung 128, in die eine Nase 34 des ersten Steckers 32 einrasten kann, um eine lösbare, feste Verbindung des ersten Steckers 32 mit dem Kabelstrang 30 an der Tülle 1 zu gewährleisten. Ansonsten umfaßt der in Figur 3 dargestellt Clip 120 ebenfalls einen Rasthaken 122, einen Rasthakenanschlag 124 und eine Nase 126 für das Angreifen an das Karosserie-Blech 140.

An den ersten Stecker 32 ist ein zweiter Stecker 132 mit einem zweiten Kabelstrang 130 unter Zwischenschaltung einer Dichtung 136, insbesondere zur akustischen Dämpfung, ansteckbar, siehe Figur 3. Der zweite Stecker 132 ist dabei vorteilhafterweise in der Karosserie 140 installiert.

Beispielsweise bei der Montage eines Kraftfahrzeuges wird zur Kabelführung im Bereich einer Türtrennstelle zuerst die Tülle 1 über den Kabelstrang 30 geschoben, anschließend das Tür-Blech 40 mit dem einen Ende der Tülle 1 über den Rasthaken 22 und die Dichtlippe 12 verbunden, daraufhin die Tülle 1 über den Rasthaken 122 und die Dichtlippe 112 mit dem Karosserie-Blech 140 verbunden und mit dem ersten Stecker 32 und dem zweiten Stecker 132 die elektrische Verbindung mit dem restlichen Kraftfahrzeug geschlossen.

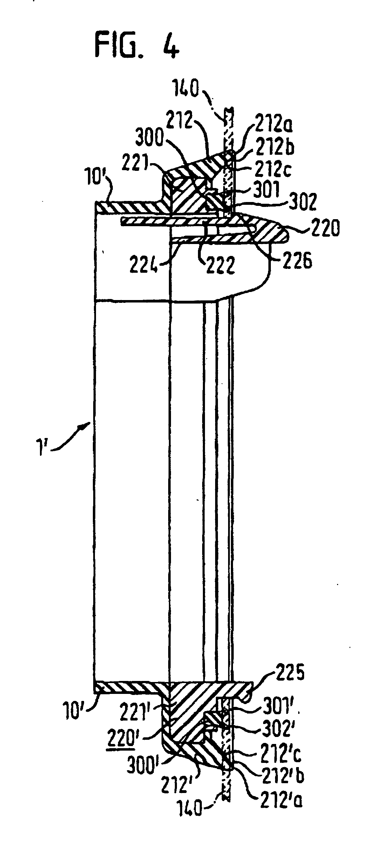

In Figur 4 ist ein karosserieseitiges Ende einer weiteren erfindungsgemäßen Tülle 1' dargestellt. Diese Tülle 1' umfaßt eine Hülle 10', einen Clip 220 sowie einen Einführhaken 220'.

Der Clip 220 umfaßt seinerseits, ebenso wie die mit Bezug auf die Figuren 2 und 3 beschriebenen Clips 20, 120, einen Rasthaken 222, beabstandet von einem Rasthakenanschlag 224 zur Vermeidung von Beschädigungen und ausgebildet mit einer Nase 226 zum Positionieren eines Karosserie-Bleches 140 auf dem Rasthaken 222. Der Rasthaken 222 samt Rasthakenanschlag 224 sind dabei an einer Ecke des karosserieseitigen Endes eines Rahmens 221 ausgeformt, an dessen anderer Ecke des karosserieseitigen Endes eine erste Dichtlippe 212 in Form einer Labyrinth-Dichtlippe mit drei Dichtzungen 212a, 212b, 212c ausgebildet ist. Zwischen der ersten Dichtlippe 212 und dem Rasthaken 222 ist, im Gegensatz zu den zuvor beschriebenen Clips 20, 120, eine zweite Dichtlippe 300 mit zwei Dichtzungen 301 und 302 angeordnet. Die Dichtlippen 212 und 300 sind dabei aus einem thermoplastischen Elastomer an den Rahmen 221, der seinerseits aus einem biegesteifen Kunststoff, beispielsweise Polypropylen, besteht, zum Ausbilden eines chemischen Verbundes angespritzt.

Der Einführhaken 220' umfaßt seinerseits einen Einhängehaken 225 an einer Ecke des karosserieseitigen Endes eines Rahmens 221' und eine erste Dichtlippe 221' in Form einer Labyrinth-Dichtung mit drei Dichtzungen 212'a, 212'b, 212'c an der anderen Ecke des karosserieseitigen Endes des Rahmens 221'. Zwischen der ersten Dichtlippe 212' und dem Einhängehaken 225 ist wiederum eine zweite Dichtlippe 300' mit zwei Dichtzungen 301' und 302' ausgebildet. Der Rahmen 221' ist ebenfalls aus biegesteifem Kunststoff ausgebildet, und die Dichtlippen 212' und 300' bestehen aus thermoplastischem Elastomer und sind an den Rahmen 221' angespritzt zum Bilden eines chemischen Verbundes.

Die Ausführungsform gemäß Figur 4 zeichnet sich zum einen durch die Möglichkeit des Ausgleiches von Toleranzen in der Ebenheit des Karosserie-Bleches 40 durch Einsatz der zweiten Dichtlippen 300, 300' und zum anderen durch Erleichterung der Montage aufgrund des Einsatzes eines Einhängehakens 225 sowie eines Rasthakens 222 aus. Zudem liegt insgesamt eine Steigerung der Dichtigkeit im Bereich der Karosserie vor.

Eine Tülle 1' gemäß Figur 4 läßt sich wie folgt an ein Karosserie-Blech 140 anbringen:

Zuerst wird der Einführhaken 220' schräg an das Karosserie-Blech 140 im Bereich einer ersten Aussparung in dem Karosserie-Blech 140 angesetzt, so daß eine Selbst-Zentrierung beim Einführen des Einhängehakens 225 in besagte Aussparung stattfindet. Die Montagekräfte sind dabei sehr niedrig, da nur die Dichtlippen 212' und 300' an das Karosserie-Blech 140 angedrückt werden müssen.

Anschließend wird der Rasthaken 222 samt Rasthakenanschlag 224 des Clips 220 in eine zweite Aussparung in dem Karosserie-Blech 140 eingedrückt, wobei aufgrund der Zentrierung der Tülle 1' über den Einführhaken 220' nur noch ein Druckpunkt zur Montage erforderlich ist. Durch die Hebelwirkung aufgrund des Abstands zwischen dem Einführhaken 220' zum Rasthaken 222 sind nur niedrige Montagekräfte hierbei erforderlich, umfassend auch die Kräfte zum Andrücken der Dichtlippen 212 und 300 an das Karosserie-Blech 140.

Somit wird durch Einsatz von erfindungsgemäßen Tüllen in Kraftfahrzeugen ein dichtes, umwelt- und montagefreundliches Türtrennstellenkonzept für elektrische Leitungen bereitgestellt.

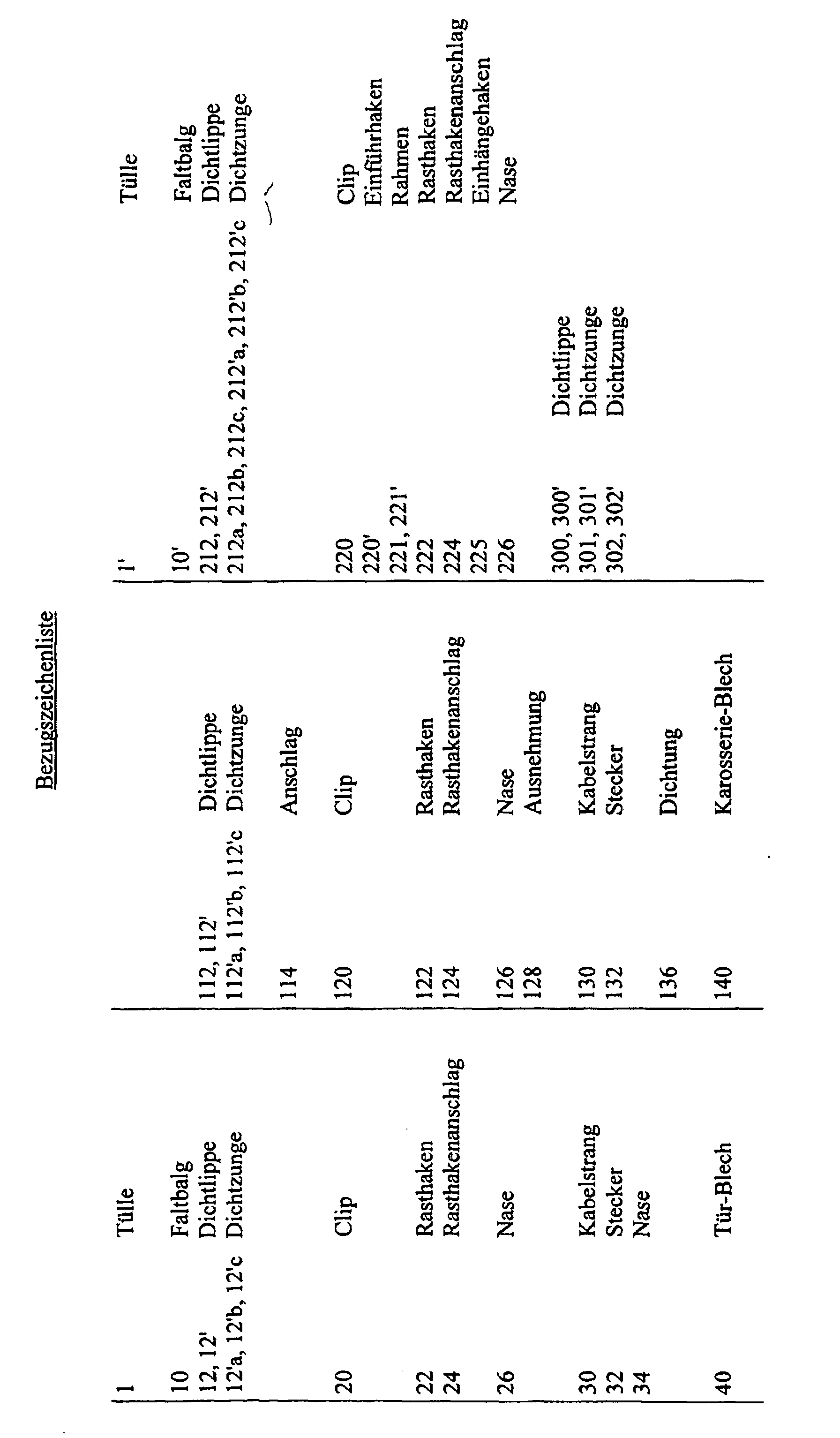

## Patentansprüche

1. Tülle, umfassend eine Hülle, wie einen Faltbalg oder dergleichen, für einen Kabelstrang zwischen zwei Montageelementen, insbesondere in Form von einer Tür und der Karosserie eines Kraftfahrzeuges, und zumindest ein Befestigungsglied für jedes Montageelement,
**dadurch gekennzeichnet, daß**
die Hülle (10, 10') aus einem ersten thermoplastischen Kunststoff, insbesondere einem thermoplastischen Elastomer, und jedes Befestigungsglied (20, 120, 220, 220') aus einem zweiten thermoplastischen Kunststoff, insbesondere Polypropylen, in einem dichten, chemischen Verbund miteinander hergestellt sind.

2. Tülle nach Anspruch 1, **dadurch gekennzeichnet, daß**
erste Befestigungsglieder (20, 120, 220), insbesondere in Form von Clips, jeweils einen Rasthaken (22, 122, 222) zum Angriff an ein Montageelement (40, 140) und einen davon beabstandeten Rasthakenanschlag (24, 124, 224) aufweisen, wobei der Abstand zwischen dem Rasthaken (22, 122, 222) und dem Rasthakenanschlag (24, 124, 224) vorzugsweise im mm-Bereich liegt.

3. Tülle nach Anspruch 2, **dadurch gekennzeichnet, daß**
jedes erste Befestigungsglied (20, 120, 220) eine Nase (26, 126, 226) zur Positionierung des entsprechenden Montageelements (40, 140) an dem Rasthaken (22, 122, 222) aufweist, wobei sich die Nase (26, 126, 226) vorzugsweise mit einer Höhe von dem Rasthaken (22, 122, 222) abhebt, die kleiner als der Abstand zwischen dem Rasthaken (22, 122, 222) und dem Rasthakenanschlag (24, 124, 224) ist.

4. Tülle nach einem der vorangehenden Ansprüche, **dadurch gekennzeichnet, daß**
zumindest auf der Seite des einen Montageelements (140), insbesondere der Karosserie des Kraftfahrzeuges, zumindest ein Befestigungsglied (120) mit einem ersten Stecker (32) des Kabelstrangs (30) lösbar verbindbar, insbesondere verrastbar, ist, vorzugsweise über eine Ausnehmung (128) in dem Befestigungsglied (120) und eine Nase (34) auf dem ersten Stecker (32), und der erste Stecker (32) mit einem zweiten Stecker (132), vorzugsweise unter zumindest bereichsweiser Zwischenschaltung einer Dichtung (136), verbindbar ist.

5. Tülle nach einem der vorangehenden Ansprüche, **dadurch gekennzeichnet, daß** die Hülle (10, 10') zwei offene Enden aufweist, und an jedem offenen Ende der Hülle (10, 10') jeweils zwei sich längs des Umfangs der Hülle (10, 10') diametral gegenüberliegende Befestigungsglieder (20, 120, 220, 220') angeordnet sind, wobei vorzugsweise die sich diametral gegenüberliegenden Befestigungsglieder entweder als zwei erste Befestigungsglieder (20, 120) in Form von Clips, insbesondere auf der Seite der Tür (40) der Karosserie des Kraftfahrzeuges, oder als ein erstes Befestigungsglied (220) in Form eines Clips und ein zweites Befestigungsglied (220') in Form eines Einführhakens, insbesondere auf der Seite der Karosserie (140) des Kraftfahrzeuges, ausgebildet sind.

6. Tülle nach einem der vorangehenden Ansprüche, **dadurch gekennzeichnet, daß**
die Hülle (10, 10') zwei offene Enden mit jeweils einer ersten, umlaufenden Dichtlippe (12, 12', 112, 112', 212, 212') zum Angreifen an ein Montageelement (40, 140) aufweist.

7. Tülle nach Anspruch 6, **dadurch gekennzeichnet, daß**
jede erste Dichtlippe (12, 12', 112, 112', 212, 212') als Labyrinth-Dichtung, vorzugsweise mit mehreren Dichtzungen (12'a, 12'b, 12'c, 112'a, 112'b, 112'c, 212a, 212b, 212c, 212a', 212b', 212c') zum dichten Angreifen an das jeweilige Montageelement (40, 140), ausgebildet ist.

8. Tülle nach einem der vorangehenden Ansprüche, **dadurch gekennzeichnet, daß**
auf der Seite des einen Montageelements (140), insbesondere der Karosserie des Kraftfahrzeuges, die Hülle (10) einen Anschlag (114) für den ersten Stecker (32) zum Positionieren, Schützen und Abdichten des ersten Steckers (32) aufweist.

9. Tülle nach einem der vorangehenden Ansprüche, **dadurch gekennzeichnet, daß** zweite Befestigungsglieder (220') jeweils zumindest einen Einhängehaken (225) aufweisen, wobei vorzugsweise jeweils an einem ersten Ende eines, insbesondere biegesteifen, Rahmens (221'), wie aus Polypropylen oder dergleichen Kunststoff, der Einhängehaken (225) an einer ersten Ecke ausgeformt und eine erste Dichtlippe (212') an einer zweiten Ecke angebracht, vorzugsweise angespritzt, ist.

10. Tülle nach einem der Ansprüche 2 bis 9, **dadurch gekennzeichnet, daß**
die ersten Befestigungsglieder (220) jeweils an einem ersten Ende eines, insbesondere biegesteifen, Rahmens (221), wie aus Polypropylen oder dergleichen Kunststoff, einen Rasthaken (222) sowie einen Rasthakenanschlag (224) an einer ersten Ecke ausgeformt und eine erste Dichtlippe (212) an einer zweiten Ecke angebracht, vorzugsweise angespritzt, haben.

11. Tülle nach einem der vorangehenden Ansprüche, **gekennzeichnet durch**
zumindest eine zweite Dichtlippe (300, 300'), insbesondere mit zwei, sich voneinander weg erstreckenden, schräg verlaufenden Dichtzungen (301, 301', 302, 302'), angebracht an ein Befestigungsglied (220, 220'), vorzugsweise angespritzt an einen Rahmen (221, 221'), zum dichten Angreifen an das jeweilige Montageelement (140).

12. Tülle nach Anspruch 11, **dadurch gekennzeichnet, daß**
die zweite Dichtlippe (300, 300') zwischen dem Rasthaken (222) oder dem Einhängehaken (225) und der ersten Dichtlippe (212, 212') an den Rahmen (221, 221') angebracht, vorzugsweise aus thermoplastischem Elastomer angespritzt, ist.

13. Kraftfahrzeug mit zumindest einer Tülle nach einem der vorangehenden Ansprüche im Bereich einer Türtrennstelle für zumindest eine elektrische Leitung, **dadurch gekennzeichnet, daß**
die Tülle (1) mit einem ersten Stecker (32) für den in der Hülle (10) geführten Kabelstrang (30) lösbar verbindbar ist, der erste Stecker (32) mit einem zweiten Stecker (132) zusammensteckbar ist, und der zweite Stecker (132) mit einem daran montierten Kabelstrang (130) in der Karosserie (140) des Kraftfahrzeuges installiert ist.

## Claims

1. A grommet, comprising a cover, such as a bellows or the like, for a cable run between two assembly elements, particularly in the form of a door and the body of a motor vehicle, and at least one fixing member for each assembly element, **characterised in that** the grommet (10, 10') consisting of a first thermoplastic, particularly a thermoplastic elastomer, and each fixing member (20, 120, 220, 220') consisting of a second thermoplastic, particularly polypropylene, are made in a dense chemical bond with one another.

2. A grommet according to claim 1, **characterised in that** first fixing members (20, 120, 220), particularly in the form of clips, each comprise a catch hook (22, 122, 222) for engagement on an assembly element (40, 140) and, spaced therefrom, a catch hook abutment (24, 124, 224), the distance between the catch hook (22, 122, 222) and the catch hook abutment (24, 124, 224), preferably being in the millimetre range.

3. A grommet according to claim 2, **characterised in that** each first fixing member (20, 120, 220) comprises a nose (26, 126, 226) for positioning of the corresponding assembly element (40, 140) on the catch hook (22, 122, 222), the nose (26, 126, 226) preferably rising from the catch hook (22, 122, 222) with a height less than the distance between the catch hook (22, 122, 222) and the catch hook abutment (24, 124, 224).

4. A grommet according to any one of the preceding claims, **characterised in that** at least on the side of the one assembly element (140), particularly the vehicle body, at least one fixing member (120) is releasably connectable, particularly catchable, to a first plug (32) of the cable run (30), preferably by way of an opening (128) in the fixing member (120) and a nose (34) on the first plug (32), and the first plug (32) is connectable to a second plug (132), preferably with the interposition of a seal (136) at least in certain zones.

5. A grommet according to any one of the preceding claims, **characterised in that** the cover (10, 10') has two open ends and at each open end of the cover (10, 10') there are disposed respectively two fixing members (20, 120, 220, 220') situated diametrically opposite one another along the periphery of the cover (10, 10'), the diametrically oppositely situated fixing members preferably being constructed either as two first fixing members (20, 120) in the form of clips, particularly on the side of the door (40) of the motor vehicle body, or as a first fixing member (220) in the form of a clip and a second fixing member (220') in the form of an insertable hook, particularly on the side of the body (140) of the motor vehicle.

6. A grommet according to any one of the preceding claims, **characterised in that** the cover (10, 10') has two open ends each having a first peripheral sealing lip (12, 12', 112, 112', 212, 212') for engagement against an assembly element (40, 140).

7. A grommet according to claim 6, **characterised in that** each first sealing lip (12, 12', 112, 112', 212, 212') is constructed as a labyrinth seal, preferably with a plurality of sealing tongues (12'a, 12'b, 12'c, 112'a, 112'b, 112'c, 212a, 212b, 212c, 212a', 212b', 212c') for sealing-tight engagement against the respective assembly element (40, 140).

8. A grommet according to any one of the preceding claims, **characterised in that** on the side of the one assembly element (140), particularly the motor vehicle body, the cover (10) has an abutment (114) for the first plug (32) for positioning, protecting and sealing the first plug (32).

9. A grommet according to any one of the preceding claims, **characterised in that** second fixing members (220') each comprise one hang-in hook (225), the hang-in hook (225) being moulded at a first corner preferably in each case at a first end of a frame (221'), particularly a flexurally stiff frame, for example from polypropylene or similar plastic, and a first sealing lip (212') is mounted, preferably injected, at a second corner.

10. A grommet according to any one of claims 2 to 9, **characterised in that** the first fixing members (220) each have moulded at a first end of a frame (221), particularly a flexurally stiff frame, for example from polypropylene or similar plastic, a catch hook (222) and a catch hook abutment (224) at a first corner and a first sealing lip (212) disposed at a second corner, preferably injected.

11. A grommet according to any one of the preceding claims, **characterised by** at least one second sealing lip (300, 300'), particularly with two obliquely extending sealing tongues (301, 301', 302, 302') extending away from one another, mounted on a fixing member (220, 220'), preferably injected on a frame (221, 221') for sealingly engaging against the respective assembly element (140).

12. A grommet according to claim 11, **characterised in that** the second sealing lip (300, 300') is mounted, preferably injected from thermoplastic elastomer, between the catch hook (222) or the hang-in hook (225) and the first sealing lip (212, 212') on the frame (221, 221').

13. A motor vehicle with at least one grommet according to any one of the preceding claims in the region of a door separation point for at least one electric cable run, **characterised in that** the grommet (1) is releasably connectable to a first plug (32) for the cable run (30) passing through the grommet (10), the first plug (32) is adapted to be connected to a second plug (132), and the second plug (132) is installed, with a cable run (130) mounted thereon, in the motor vehicle body (140).

## Revendications

1. Manchon, comprenant une gaine, telle qu'un soufflet pliant ou analogue, pour un faisceau de câbles entre deux éléments de montage, en particulier sous la forme d'une portière et de la carrosserie d'un véhicule automobile, et comprenant au moins un organe de fixation pour chaque élément de montage
**caractérisé en ce que**
la gaine (10, 10') et chaque organe de fixation (20, 120, 220, 220') sont fabriqués ensemble en un composite chimique étanche, la gaine (10, 10') étant fabriquée en une première matière synthétique thermoplastique, en particulier un élastomère thermoplastique, et chaque organe de fixation (20, 120, 220, 220') étant fabriqué en une deuxième matière synthétique thermoplastique, en particulier en polypropylène.

2. Manchon selon la revendication 1, **caractérisé en ce que** des premiers organes de fixation (20, 120, 220), réalisés en particulier sous la forme d'attaches, présentent chacun un crochet d'encliquetage (22, 122, 222), pour emprise sur un élément de montage (40, 140), et une butée de crochet d'encliquetage (24, 124, 224) placée à distance de celui-ci, l'espacement entre le crochet d'encliquetage (22, 122, 222) et la butée de crochet d'encliquetage (24, 124, 224) étant de préférence dans la plage des mm.

3. Manchon selon la revendication 2, **caractérisé en ce que** chaque premier organe de fixation (20, 120, 220) présente un ergot (26, 126, 226) pour le positionnement de l'élément de montage (40, 140) correspondant sur le crochet d'encliquetage (22, 122, 222), l'ergot (26, 126, 226) se soulevant de préférence du crochet d'encliquetage (22, 122, 222) d'une hauteur inférieure à l'espacement entre le crochet d'encliquetage (22, 122, 222) et la butée de crochet d'encliquetage (24, 124, 224).

4. Manchon selon l'une des revendications précédentes, **caractérisé en ce que**, au moins sur le côté d'un élément de montage (140), en particulier de la carrosserie du véhicule automobile, au moins un organe de fixation (120) est susceptible d'être relié de façon désolidarisable, en particulier est susceptible d'être encliqueté à une première prise mâle (32) du faisceau de câbles (30), de préférence par l'intermédiaire d'un évidement (128) ménagé dans l'organe de fixation (120), et d'un ergot (34), placé sur la première prise mâle (32), et la première prise mâle (32) étant susceptible d'être reliée à une deuxième prise mâle (132), de préférence avec interposition, au moins par zones, d'un joint d'étanchéité (136).

5. Manchon selon l'une des revendications précédentes, **caractérisé en ce que** la gaine (10, 10') présente deux extrémités ouvertes, et, sur chaque extrémité ouverte de la gaine (10, 10'), sont respectivement disposés deux organes de fixation (20, 120, 220'), diamétralement opposés le long de la périphérie de la gaine (10, 10'), de préférence les organes de fixation diamétralement opposés étant réalisés soit sous la forme de deux premiers organes de fixation (20, 120) ayant la forme d'attaches, en particulier sur le côté de la porte (40) de la carrosserie du véhicule automobile, soit sous la forme d'un premier organe de fixation (220) ayant la forme d'une attache, et d'un deuxième organe de fixation (220') ayant la formé d'un crochet d'insertion, en particulier du côté de la carrosserie (140) du véhicule automobile.

6. Manchon selon l'une des revendications précédentes, **caractérisé en ce que** la gaine (10, 10') présente deux extrémités ouvertes, ayant chacune une première lèvre d'étanchéité (12, 12', 112, 112', 212, 212') de pourtour pour l'emprise sur un élément de montage (40, 140).

7. Manchon selon la revendication 6, **caractérisé en ce que** chaque première lèvre d'étanchéité (12, 12', 112, 112', 212, 212') est réalisée sous la forme de joints d'étanchéité à labyrinthe, de préférence avec plusieurs languettes d'étanchéité (12'a, 12'b, 12'c, 112'a, 112'b, 112'c, 212a, 212b, 212c, 212a', 212b', 212c') pour l'emprise étanche sur l'élément de montage (40, 140) respectif.

8. Manchon selon l'une des revendications précédentes, **caractérisé en ce que**, sur le côté d'un élément de montage (140), en particulier de la carrosserie du véhicule automobile, la gaine (10) présente une butée (114) pour la première prise mâle (32), afin de positionner, protéger et isoler de façon étanche la première prise mâle (32).

9. Manchon selon l'une des revendications précédentes, **caractérisé en ce que** deux organes de fixation (220') présentent respectivement au moins un crochet d'accrochage (225), où de préférence chaque fois, sur une première extrémité d'un cadre (221'), en particulier rigide en flexion, tel qu'en propylène ou en matière synthétique analogue, le crochet d'accrochage (225) est formé sur un premier coin, et une première lèvre d'étanchéité (212') est montée sur un deuxième coin, de préférence en étant rapportée d'une seule pièce par injection.

10. Manchon selon l'une des revendications 2 à 9, **caractérisé en ce que** les premiers organes de fixation (220) ont chaque fois, à une première extrémité d'un cadre (221), en particulier rigide en flexion, tel qu'en propylène ou en matière synthétique analogue, un crochet d'encliquetage (222) ainsi qu'une butée pour crochet d'encliquetage (224) formée sur un premier coin, et une première lèvre d'étanchéité (212), montée sur un deuxième coin, de préférence rapportée d'une seule pièce par injection.

11. Manchon selon l'une des revendications précédentes, **caractérisé par** au moins une deuxième lèvre d'étanchéité (300, 300'), en particulier avec deux languettes d'étanchéité (301, 301', 302, 302'), s'étendant obliquement, s'écartant l'une de l'autre, montées sur un organe de fixation (220, 220'), de préférence rapportées d'une seule pièce par injection sur un cadre (221, 221'), pour obtenir une emprise étanche sur l'élément de montage (140) respectif.

12. Manchon selon la revendication 11, **caractérisé en ce que** la deuxième lèvre d'étanchéité (300, 300'), entre le crochet d'encliquetage (222) ou le crochet d'accrochage (225) et la première lèvre d'étanchéité (212, 212'), est montée sur le cadre (221, 221'), en étant de préférence rapportée par injection, d'une seule pièce, en élastomère thermoplastique.

13. Véhicule automobile comportant au moins un manchon selon l'une des revendications précédentes, dans la zone d'une interface de porte pour au moins une ligne électrique, **caractérisé en ce que**
le manchon (1) est susceptible d'être relié de façon désolidarisable à une première prise mâle (32) pour le tronçon de câble (30) guidé dans la gaine (10), la première prise mâle (23) est susceptible d'être embrochée à une deuxième prise mâle (132), et la deuxième prise mâle (132) est installée, avec un tronçon de câble (130) monté dessus, dans la carrosserie (140) du véhicule automobile.
